# EUROPEAN PATENT SPECIFICATION

(11) **EP 2 802 097 B1**
(45) Date of publication and mention of the grant of the patent: **16.11.2016**
(21) Application number: 13747147.0
(22) Date of filing: 01.02.2013
(51) Int. Cl.: H04J 3/06, H04L 7/033

(54) **CLOCK SYNCHRONIZATION METHOD AND DEVICE**
TAKTSYNCHRONISIERUNGSVERFAHREN UND VORRICHTUNG
PROCÉDÉ ET DISPOSITIF DE SYNCHRONISATION D'HORLOGE

(30) Priority: 09.02.2012 CN 201210028240
(43) Date of publication of application: 12.11.2014
(73) Proprietor: ZTE Corporation, Shenzhen, Guangdong 518057 (CN)
(72) Inventor: ZHANG, Junhui, Shenzhen Guangdong 518057 (CN); WANG, Delong, Shenzhen Guangdong 518057 (CN)
(74) Representative: Gervasi, Gemma
(86) International application number: PCT/CN2013/071244
(87) International publication number: WO 2013/117143

(56) References cited:
- CN-A- 1 589 425
- CN-A- 101 330 375
- US-A- 6 121 816
- US-A1- 2006 056 563
- US-B1- 6 707 828
- US-B1- 6 718 476

## Description

### Technical Field

The present invention relates to the clock synchronization communication network, and in particular, to a clock synchronization method and apparatus in the clock synchronization network.

### Background of the Related Art

With the high-speed development of the Ethernet and the 3rd Generation (3G) network, the realization of the clock and time synchronization in the packet network achieves increasing attention and extensive application. The domestic and foreign operators continually use the synchronous Ethernet to realize the clock synchronization, perform the time synchronization by adopting the 1588 protocol, and progressively replace the mode of using the Global Positioning System (GPS) to perform the time synchronization.

The ITU-T G.781 clock synchronization standard defines that, when it is transmitted regularly, the clock quality level information is transmitted downwards through the Synchronization Status Message (SSM); when the clock synchronization is realized by adopting the PTP, the clock quality level information is transmitted downwards through the Announce message; that is, after the synchronization device selects some new clock source based on the clock selecting source algorithm, it needs to send the selected clock source level information to the downstream device after delaying some time. But the defect of this method is that the status of the phase lock loop of the clock device is not considered, that is, after the synchronization device selects some new clock source, the phase lock loop of the synchronization device has not really locked the new clock source yet; and it takes a longer time for the phase lock loop from the free oscillation mode or maintaining mode to the locking mode, especially in the situation of adopting the Precision Timing Protocol (PTP) message mode to perform the frequency recovery, and the process of the frequency locking is slower, and therefore, when the physical clock and the packet clock are adopted for the hybrid networking, the problem that the clock protocol layer is inconsistent with the clock physical layer is much more serious.

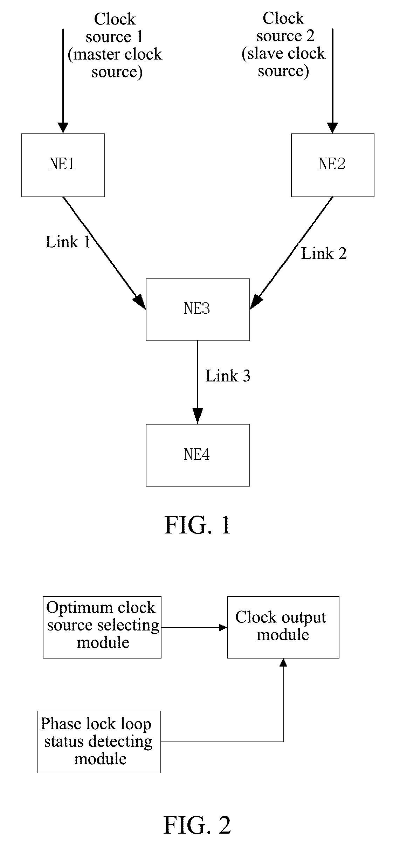

As shown in FIG. 1, it is a procedure of switching the clock source and the clock synchronization, and the specific processing procedure includes the following steps:
in step 1, the NE1 and the NE2 are regarded as the master and slave clock sources of the clock network respectively, to lock the external clock and provide the frequency output for the whole network. Under the normal situation, the NE3 tracks the NE1 through the frequency of the link 1 and provides the output for the downstream device NE4. When the link 1 is not available, the NE3 will track the NE2 device through the link 2.
In step 2, when the NE1 breaks down, the NE3 will run the clock selecting source algorithm, to select the NE2 as the new clock source; and the NE3 sends the clock quality level information of the NE2 to the downstream NE4 after delaying some time.
In step 3, when the NE1 returns to normal again and selects the clock source 1, and sends the level information of the clock source 1 to the NE3, but the NE1 does not really lock the clock source 1 at this moment, because the phase lock loop of the NE1 is transferring from the free oscillation mode to the locking mode at this moment, and this stage is slower.
In step 4, after the NE3 receives the clock quality level information of the NE1, it will reselect the clock of the link 1 as the clock source, but the NE1 does not lock the clock source1 yet at this moment, thereby causing the clock performance of the NE3 from good to bad, and causing the clock performance of the downstream device to become bad.

Therefore, in some cases, that the clock protocol layer is inconsistent with the clock physical layer will cause the turbulence of the synchronization link topology, cause the clock performance of the downstream device to become bad, and influence the synchronization quality and stability of the synchronization network;

US6718476 B1 provides a method of synchronizing each local clock to a master clock in a data bus system. In an embodiment, the data bus system includes a plurality of nodes each having a local clock. Initially, a clock source for each local clock is the respective local clock generator of each node. During formation of a data bus configuration for the data bus system, each node assigns either a first identifier or a second identifier to each port that is coupled to another port. If a node has a first identifier port, the node changes a clock source for its local clock from the local clock generator to a particular clock recovery circuit that is coupled to the first identifier port. In another embodiment, a clock source for each local clock is initially the respective multiple mode clock recovery circuit (MMCRC) operating in the unlocked mode. During formation of a data bus configuration for the data bus system, each node assigns either a first identifier or a second identifier to each port that is coupled to another port. If a node has a first identifier port, the node changes a clock source for its local clock from the MMCRC operating in the unlocked mode to the MMCRC operating in the locked mode, which is coupled to the first identifier port. The local clock of the root node serves as the master clock for synchronizing the local clocks of the other nodes.

### Content of the Invention

The technical problem that the present invention requires to solve is to provide a clock synchronization method and apparatus, to increase the reliability and stability of the synchronization network.

The features of the method and apparatus according to the present invention are defined in the independent claims, and the preferable features according to the present invention are defined in the dependent claims.

In order to solve the above-mentioned problem, the present invention provides a clock synchronization method, comprising:
a synchronization device selecting an optimum clock source, checking a current status of a phase lock loop, and determining a clock quality level sent to a downstream device according to the selected clock source and the current status of the phase lock loop.

Preferably, the above-mentioned method further has the following characteristics, said determining a clock quality level sent to a downstream device according to the selected clock source and the current status of the phase lock loop comprises:
when the current status of the phase lock loop is a locking mode, the clock quality level sent to the downstream device being a clock quality level of the clock source selected by the synchronization device.

Preferably, the above-mentioned method further has the following characteristics, said determining a clock quality level sent to a downstream device according to the selected clock source and the current status of the phase lock loop comprises:
when the current status of the phase lock loop is a maintaining mode or a free oscillation mode, the clock quality level sent to the downstream device being the clock quality level of the synchronization device.

Preferably, the above-mentioned method further has the following characteristics, said determining a clock quality level sent to a downstream device according to the selected clock source and the current status of the phase lock loop comprises:
during a process of the phase lock loop transferring from a free oscillation mode to a locking mode, if the current status of the phase lock loop is a unlocking mode, the synchronization device sending the clock quality level of the synchronization device to the downstream device, and then continuing detecting the status of the phase lock loop; and after the status of the phase lock loop is transferred to the locking mode, sending the clock quality level of the clock source selected by the synchronization device to the downstream device.

Preferably, the above-mentioned method further has the following characteristics, said determining a clock quality level sent to a downstream device according to the selected clock source and the current status of the phase lock loop comprises:
when the current status of the phase lock loop is failure of phase lock loop, the clock quality level sent to the downstream device being the clock quality level of the synchronization device.

The present invention further provides a clock synchronization apparatus, comprising:
an optimum clock source selecting module, configured to select a clock source;
a phase lock loop status detecting module, configured to check a current status of a phase lock loop after the optimum clock source selecting module selects the clock source; and
a clock output module, configured to determine a clock quality level sent to a downstream device according to the clock source selected by the optimum clock source selecting module and the current status of the phase lock loop.

Preferably, the above-mentioned apparatus further has the following characteristics, said clock output module determining a clock quality level sent to a downstream device according to the selected clock source and the current status of the phase lock loop comprises:
when the current status of the phase lock loop is a locking mode, the clock quality level sent to the downstream device being the clock quality level of the clock source selected by the synchronization device.

Preferably, the above-mentioned apparatus further has the following characteristics, the clock output module determining a clock quality level sent to a downstream device according to the selected clock source and the current status of the phase lock loop comprises:
when the current status of the phase lock loop is a maintaining mode or a free oscillation mode, the clock quality level sent to the downstream device being the clock quality level of the synchronization device.

Preferably, the above-mentioned apparatus further has the following characteristics, the clock output module determining a clock quality level sent to a downstream device according to the selected clock source and the current status of the phase lock loop comprises:
during a process of the phase lock loop transferring from a free oscillation mode to a locking mode, when the current status of the phase lock loop is a unlocking mode, sending the clock quality level of the synchronization device to the downstream device, and then continuing detecting the status of the phase lock loop; and after the status of the phase lock loop is transferred to the locking mode, sending the clock quality level of the clock source selected by the synchronization device to the downstream device.

Preferably, the above-mentioned apparatus further has the following characteristics, the clock output module determining a clock quality level sent to a downstream device according to the selected clock source and the current status of the phase lock loop comprises:
when the current status of the phase lock loop is failure of phase lock loop, the clock quality level sent to the downstream device being the clock quality level of the synchronization device.

By adopting the method and apparatus of the embodiment of the present invention, the method for sending the clock quality level to the downstream according to the phase lock loop status of the clock device ensures the consistency of the clock protocol layer and the clock physical layer, avoids the frequency and phase fluctuations caused by the incorrect or premature routing of the downstream device of the clock synchronization network and increases the reliability and stability of clock synchronization.

### Brief Description of Drawings

FIG. 1 is a diagram of clock source switching and clock synchronization;
FIG. 2 is a block diagram of a clock synchronization apparatus according to an embodiment of the present invention;
FIG. 3 is a flow chart of a clock synchronization method according to an embodiment of the present invention;
FIG. 4 is a block diagram of a clock synchronization apparatus according to an application example of the present invention;
FIG. 5 is a procedure of selecting a clock source according to an embodiment of the present invention.

### Preferred Embodiments of the Present Invention

The embodiment of the present invention is described in detail with reference to the accompanying drawings hereinafter. It should be illustrated that, in the case of not conflicting, the embodiments in the present application and features in these embodiments can be combined with each other.

As shown in FIG. 2, the embodiment of the present invention provides a clock synchronization apparatus, including:
an optimum clock source selecting module, configured to select a clock source;
a phase lock loop status detecting module, configured to check a current status of a phase lock loop after the optimum clock source selecting module selects the clock source; and
a clock output module, connected to the optimum clock source selecting module and the phase lock loop status detecting module, configured to determine a clock quality level sent to a downstream device according to the clock source selected by the optimum clock source selecting module and the current status of the phase lock loop.

Wherein, the clock output module determining a clock quality level sent to a downstream device according to the selected clock source and the current status of the phase lock loop includes:
when the current status of the phase lock loop is a locking mode, the clock quality level sent to the downstream device being the clock quality level of the clock source selected by the synchronization device.

Wherein, the clock output module determining a clock quality level sent to a downstream device according to the selected clock source and the current status of the phase lock loop includes:
when the current status of the phase lock loop is a maintaining mode or a free oscillation mode, the clock quality level sent to the downstream device being the clock quality level of the synchronization device.

Wherein, the clock output module determining a clock quality level sent to a downstream device according to the selected clock source and the current status of the phase lock loop includes:
during a process of the phase lock loop transferring from a free oscillation mode to a locking mode, when the current status of the phase lock loop is a unlocking mode, sending the clock quality level of the synchronization device to the downstream device, and then continuing detecting the status of the phase lock loop; and after the status of the phase lock loop is transferred to the locking mode, sending the clock quality level of the clock source selected by the synchronization device to the downstream device.

Wherein, the clock output module determining a clock quality level sent to a downstream device according to the selected clock source and the current status of the phase lock loop includes:
when the current status of the phase lock loop is failure of phase lock loop, the clock quality level sent to the downstream device being the clock quality level of the synchronization device.

The embodiment of the present invention further provides a clock synchronization method, including:
a synchronization device selecting a clock source, checking a current status of a phase lock loop, and determining a clock quality level sent to a downstream device according to the selected clock source and the current status of the phase lock loop.

Wherein, said determining a clock quality level sent to a downstream device according to the selected clock source and the current status of the phase lock loop includes:
when the current status of the phase lock loop is a locking mode, the clock quality level sent to the downstream device being the clock quality level of the clock source selected by the synchronization device.

Wherein, said determining a clock quality level sent to a downstream device according to the selected clock source and the current status of the phase lock loop includes:
when the current status of the phase lock loop is a maintaining mode or a free oscillation mode, the clock quality level sent to the downstream device being the clock quality level of the synchronization device.

Wherein, during a process of the phase lock loop transferring from a free oscillation mode to a locking mode, when the current status of the phase lock loop is a unlocking mode, after the synchronization device sends the clock quality level of the synchronization device to the downstream device, the status of the phase lock loop is continued to be detected; and after the status of the phase lock loop is transferred to the locking mode, the clock quality level of the clock source selected by the synchronization device is sent to the downstream device.

Wherein, said determining a clock quality level sent to a downstream device according to the selected clock source and the current status of the phase lock loop includes:
when the current status of the phase lock loop is failure of phase lock loop, the clock quality level sent to the downstream device being the clock quality level of the synchronization device.

Wherein, the method for the synchronization device selecting the clock source is not limited in the present invention, and it may be the existing SSM source selecting algorithm or the Alternate Best Master Clock Algorithm (Alternate BMCA) based on the packet clock technology.

Wherein, the synchronization device can send the clock quality level to the downstream device through the SSM message or the PTP message or other clock synchronization messages. The present invention is further explained by taking the SSM message as an example in the following embodiment.

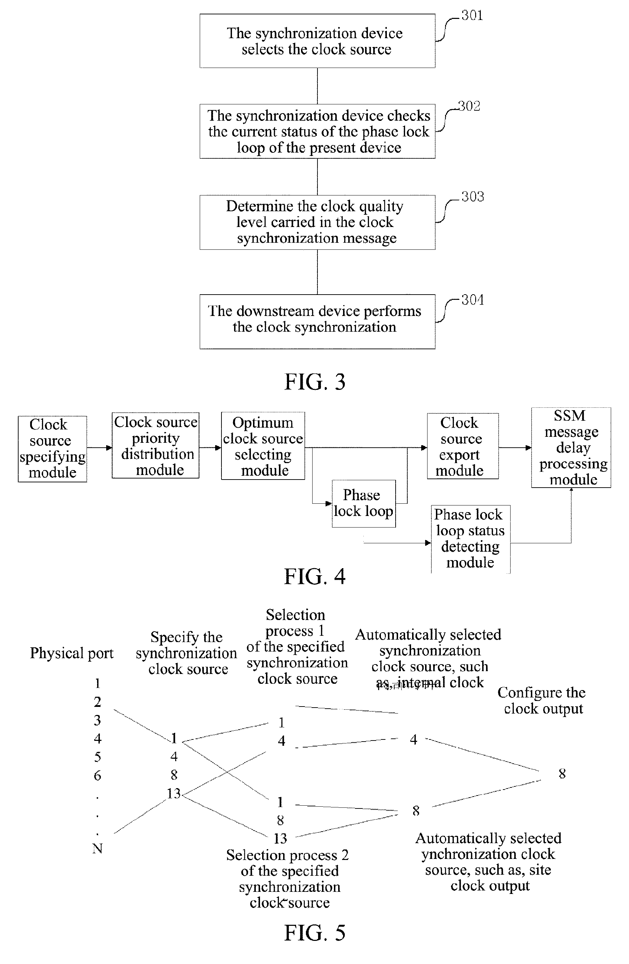

As shown in FIG. 3, the embodiment of the present invention provides a clock synchronization method, including the following steps:
in step 301, the synchronization device selects the optimum clock source.
Specifically, it can be selected according to the SSM algorithm.

In step 302, the synchronization device checks the current status of the phase lock loop of the present device.

In step 303, the synchronization device determines the clock quality level in the clock synchronization message sent to the downstream device according to the current status of the phase lock loop, and sends the clock synchronization message after the transmission opportunity is reached, specifically:
a), if the current status of the phase lock loop is the locking mode, then the clock quality level message of the selected clock source is sent to the downstream device;
b), if the current status of the phase lock loop is the maintaining mode or the free oscillation mode, then the clock quality level information of the crystal oscillator of the present device is sent to downstream device;
c), if the synchronization device has a clock hardware failure, such as, a failure of phase lock loop, then the clock of the present device is adopted to drive the downstream device, and then the clock level of the present device as the clock quality level is sent to the downstream;
d), during a process of the phase lock loop transferring from the free oscillation mode to the locking mode, when the current status of the phase lock loop is a unlocking mode, after the synchronization device sends the clock quality level of the synchronization device to the downstream device, the status of the phase lock loop is continued to be detected; and after the status of the phase lock loop is transferred to the locking mode, the clock quality level of the clock source selected by the synchronization device is sent to the downstream device.

Wherein, the clock synchronization message can be the SSM message.

In step 304, the downstream device performs the clock synchronization according to the existing standard specification.

The present invention further provides an application example of the clock synchronization apparatus, as shown in FIG. 4, including the following modules:
a clock source specifying module, that is, one or more ports are specified from all physical ports of the synchronization device to be used as the input port of the clock source, wherein, these clock sources will participate in the selection of the optimum clock source.

A clock source priority distribution module, that is, the priority is distributed for the input clock source.

The above-mentioned two modules can also be omitted, for example, the above-mentioned two modules can be omitted under the situation that the input clock source is fixed and the priority of the clock source is fixed.

An optimum clock source selecting module, that is, according to the distributed clock source relevant information, for example, the information such as the clock quality level, the priority, the alarm and so on, the SSM algorithm is run to select the optimum clock source as the system clock of the present device; the selection algorithm is only an example, and it is not limited in the present invention.

A phase lock loop is connected with the optimum clock source selecting module, a clock source export module and a phase lock loop status detecting module, and it is used for locking the clock source selected by the optimum clock source selecting module.

A clock source export module is used for exporting the optimum clock source, generating the SSM message carrying the clock quality level of the optimum clock source selected by the optimum clock source selecting module, and sending to an SSM message delay processing module.

A phase lock loop status detecting module is connected to the phase lock loop and connected to the SSM message delay processing module, and it is used for detecting the current status of the phase lock loop of the present device after selecting the clock source.

The SSM message delay processing module is used for, after selecting the optimum clock source and after the delay time expires, and then determining the clock quality level in the SSM message according to the current status of the phase lock loop, including specifically:
(1), if the current phase lock loop is the locking mode, then the clock quality level information of the selected clock source is sent to the downstream;
(2), if the current phase lock loop is the maintaining mode or the free oscillation mode, then the clock quality level information of the present device is sent to the downstream;
(3), if there is a clock hardware failure in the synchronization device, such as, a failure of phase lock loop, then the clock of the present device is adopted to drive the downstream device, and the clock level of the present device as the clock quality level is sent to the downstream;
d), during a process of the phase lock loop transferring from the free oscillation mode to the locking mode, when the current status of the phase lock loop is a unlocking mode, after the synchronization device sends the clock quality level of the synchronization device to the downstream device, the status of the phase lock loop is continued to be detected; and after the status of the phase lock loop is transferred to the locking mode, the clock quality level of the clock source selected by the synchronization device is sent to the downstream device.

Wherein, the above-mentioned clock source export module and the SSM message delay processing module are equivalent to the clock output module in the previous embodiment.

FIG. 5 is a diagram of a process of selecting the optimum clock source according to an embodiment of the present invention, and the specific processing steps include the following steps:
in step 501, some ports from all physical ports of the synchronization device are specified to be used as the input ports of the clock sources, wherein, these clock sources will participate in the selection of the optimum clock source; in FIG. 5, 4 interfaces 1, 4, 8 and 13, are selected from n interfaces to serve as the clock sources.
In step 502, one subset is selected from all input clock sources, and the priority is distributed for them, and these clock sources will participate in the clock source selection process, and the SSM algorithm will calculate the optimum clock source according to the information, such as, the clock quality, the priority, etc.; in FIG. 5, the priority is distributed for 1, 8 and 13, and one optimum clock source is selected according to the information such as Quality Level (QL) of these input clock sources, the priority, etc.
In step 503, according to the distributed clock source relevant information, for example, the information such as the clock quality level, the priority, the alarm, etc., the SSM algorithm is run to select the optimum clock source as the system clock of the present device.

In FIG. 5, the optimum clock source 8 is selected as the system clock according to the information, such as the QL of the input clock source, the priority, etc.

In step 504, after selecting the optimum clock source and before sending the SSM message to the downstream device, it needs to detect the current status of the phase lock loop of the present device; after the delay time expires, then which kind of SSM message will be sent is determined according to the current status of the phase lock loop, including specifically:
(1), if the current phase lock loop is in the locking status, then the clock quality level information of the selected clock source is sent to the downstream; (2), if the current phase lock loop is in the maintaining mode or the free oscillation mode, then the clock quality level information of the present device is sent to the downstream; (3), if there is a clock hardware failure in the synchronization device, such as, a failure of phase lock loop, then the clock quality level being the clock level of the present device is sent to the downstream; (4), during a process of the status of the phase lock loop transferring from the free oscillation mode to the locking mode, it needs to detect the current status of the phase lock loop; if it is the locking mode, the clock synchronization message carries the clock quality level information of the selected clock source; if it is the unlocking mode, then the clock synchronization message carries the clock quality level information of the synchronization device.

In another embodiment of the present invention, the present invention is applied to the scene illustrated in FIG. 1. At this moment, the clock switchover and clock synchronization method includes the following steps:
in step 601, the NE1 and the NE2 are regarded as the master and slave clock sources of the clock network respectively, locking the external clock, and providing the frequency output for whole network. Under the normal situation, the NE3 tracks the NE1 through the frequency of link 1 and provides the output for the downstream device NE4. When the link 1 is not available, the NE3 will track the NE2 device through the link 2.
In step 602, when the failure of NE1 occurs, the NE3 will run the SSM selection source algorithm to select the NE2 as the new clock source; and the NE3 sends the clock quality level of the NE2 to the downstream NE4 after delaying some time.
In step 603, after the NE1 returns to normal again and selects the clock source 1, it further needs to detect the phase lock loop status of the NE1; since the clock source1 is not locked yet at this moment, the clock quality level in the SSM message sent to the NE3 is the quality level of the NE1 device, while not the quality level of the clock source 1.
In step 604, after the NE3 receives the SSM message of the NE1, it finds that the clock quality level of the link 1 is worse than the one of link 2 and will not select the clock of the link 1, thus avoiding incorrect premature selection and locking the clock of the link 1.

The present invention is compared with the related art. For the existing ITU-T G.781 standard specification, after selecting the optimum clock source and delaying some time, the SSM message carrying the clock quality level of the selected clock source is sent immediately to the downstream. In some cases, it will cause the frequency and phase fluctuations caused by the incorrect or premature routing of the downstream device; in the embodiments of present invention, the phase lock loop status detecting module is added and it is used for detecting the current status of phase lock loop of the present device and determining which kind of clock quality level information is sent to the downstream according to the current status of phase lock loop, and its purpose is to delay announcing the new clock level to the external when there is the switching from the internal clock to other types of clock sources in the device, and then the downstream device to track the device is allowed after the frequency source selected by the device is steady enough. The technical scheme adopted by the present invention avoids the problem of frequency and phase fluctuations caused by the incorrect or premature routing of the downstream device completely, thereby improving the reliability and stability of clock synchronization.

It can be understood by those skilled in the art that all or part of steps in the above-mentioned method can be fulfilled by programs instructing the relevant hardware components, and the programs can be stored in a computer readable storage medium such as a read only memory, a magnetic disk or an optical disk, etc. Alternatively, all or part of the steps in the above-mentioned embodiments can be implemented with one or more integrated circuits. Accordingly, each module/unit in the above-mentioned embodiments can be implemented in the form of hardware, or in the form of software function module. The present invention is not limited to any specific form of the combination of the hardware and software.

The above description is only the specific embodiment of the present invention and is not intended to limit the protection scope of the present invention. Those modifications and replacements which can be thought out easily by those skilled in the art in the technical scope disclosed by the present invention should be included in the protection scope of the present invention. Therefore, the protection scope of the present invention should be based on the protection scope defined by the claims.

### Industrial Applicability

By adopting the method and apparatus of the embodiment of the present invention, the method for sending the clock quality level to the downstream according to the status of phase lock loop of the clock device ensures the consistency of the clock protocol layer and the clock physical layer, avoids the frequency and phase fluctuations caused by the incorrect or premature routing of the downstream device of the clock synchronization network, and improves the reliability and stability of clock synchronization.

## Claims

1. A clock synchronization method, comprising:
a synchronization device selecting an optimum clock source (301), checking a current status of a phase lock loop (302), and determining a clock quality level sent to a downstream device according to the selected clock source and the current status of the phase lock loop (303);
**characterized in that**,
said determining a clock quality level sent to a downstream device according to the selected clock source and the current status of the phase lock loop comprises:
when the current status of the phase lock loop is a maintaining mode or a free oscillation mode, the clock quality level sent to the downstream device being a clock quality level of the synchronization device.

2. The method according to claim 1, wherein, said determining a clock quality level sent to a downstream device according to the selected clock source and the current status of the phase lock loop comprises:
when the current status of the phase lock loop is a locking mode, the clock quality level sent to the downstream device being a clock quality level of the clock source selected by the synchronization device.

3. The method according to claim 1, wherein, said determining a clock quality level sent to a downstream device according to the selected clock source and the current status of the phase lock loop comprises:
during a process of the phase lock loop transferring from a free oscillation mode to a locking mode, if the current status of the phase lock loop is a unlocking mode, after the synchronization device sends a clock quality level of the synchronization device to the downstream device, continuing detecting the status of the phase lock loop; and after the status of the phase lock loop is transferred to the locking mode, sending a clock quality level of the clock source selected by the synchronization device to the downstream device.

4. The method according to claim 1, wherein, said determining a clock quality level sent to a downstream device according to the selected clock source and the current status of the phase lock loop comprises:
when the current status of the phase lock loop is failure of phase lock loop, the clock quality level sent to the downstream device being a clock quality level of the synchronization device.

5. A clock synchronization apparatus, comprising:
an optimum clock source selecting module, configured to select a clock source;
a phase lock loop status detecting module, configured to check a current status of a phase lock loop after the optimum clock source selecting module selects the clock source; and
a clock output module, configured to determine a clock quality level sent to a downstream device according to the clock source selected by the optimum clock source selecting module and the current status of the phase lock loop;
**characterized in that**,
the clock output module is further configured to determined a clock quality level sent to a downstream device according to the selected clock source and the current status of the phase lock loop by the following way:
when the current status of the phase lock loop is a maintaining mode or a free oscillation mode, the clock quality level sent to the downstream device being a clock quality level of the synchronization device.

6. The apparatus according to claim 5, wherein, the clock output module is further configured to determine a clock quality level sent to a downstream device according to the selected clock source and the current status of the phase lock loop by the following way:
when the current status of the phase lock loop is a locking mode, the clock quality level sent to the downstream device being a clock quality level of the clock source selected by the synchronization device.

7. The apparatus according to claim 5, wherein, the clock output module is further configured to determine a clock quality level sent to a downstream device according to the selected clock source and the current status of the phase lock loop by the following way:
during a process of the phase lock loop transferring from a free oscillation mode to a locking mode, when the current status of the phase lock loop is a unlocking mode, after sending a clock quality level of the synchronization device to the downstream device, continuing detecting the status of the phase lock loop; and after the status of the phase lock loop is transferred to the locking mode, sending a clock quality level of the clock source selected by the synchronization device to the downstream device.

8. The apparatus according to claim 5, wherein, the clock output module is further configured to determine a clock quality level sent to a downstream device according to the selected clock source and the current status of the phase lock loop by the following way:
when the current status of the phase lock loop is failure of phase lock loop, the clock quality level sent to the downstream device being a clock quality level of the synchronization device.

## Patentansprüche

1. Taktsynchronisationsverfahren, das umfasst:
eine Synchronisationsvorrichtung, die eine optimale Taktquelle (301) auswählt, einen gegenwärtigen Status eines Phasenregelkreises (302) prüft und einen an eine nachgeordnete Vorrichtung gesendeten Taktqualitätsgrad in Übereinstimmung mit der ausgewählten Taktquelle und mit dem gegenwärtigen Status des Phasenregelkreises (303) bestimmt;
**dadurch gekennzeichnet, dass**
das genannte Bestimmen eines an eine nachgeordnete Vorrichtung gesendeten Taktqualitätsgrads in Übereinstimmung mit der ausgewählten Taktquelle und mit dem gegenwärtigen Status des Phasenregelkreises umfasst:
dass der an die nachgeordnete Vorrichtung gesendete Taktqualitätsgrad ein Taktqualitätsgrad der Synchronisationsvorrichtung ist, wenn der gegenwärtige Status des Phasenregelkreises eine Aufrechterhaltungsbetriebsart oder eine Freischwingungsbetriebsart ist.

2. Verfahren gemäß Anspruch 1, wobei das genannte Bestimmen eines an eine nachgeordnete Vorrichtung gesendeten Taktqualitätsgrads in Übereinstimmung mit der ausgewählten Taktquelle und mit dem gegenwärtigen Status des Phasenregelkreises umfasst:
dass der an die nachgeordnete Vorrichtung gesendete Taktqualitätsgrad ein Taktqualitätsgrad der durch die Synchronisationsvorrichtung ausgewählten Taktquelle ist, wenn der gegenwärtige Status des Phasenregelkreises eine Verriegelungsbetriebsart ist.

3. Verfahren gemäß Anspruch 1, wobei das genannte Bestimmen eines an eine nachgeordnete Vorrichtung gesendeten Taktqualitätsgrads in Übereinstimmung mit der ausgewählten Taktquelle und mit dem gegenwärtigen Status des Phasenregelkreises umfasst:
weiteres Detektieren des Status des Phasenregelkreises, nachdem die Synchronisationsvorrichtung einen Taktqualitätsgrad der Synchronisationsvorrichtung an die nachgeordnete Vorrichtung gesendet hat, falls während eines Prozesses des Übergangs des Phasenregelkreises aus einer Freischwingungsbetriebsart in eine Verriegelungsbetriebsart der gegenwärtige Status des Phasenregelkreises eine Entriegelungsbetriebsart ist; und Senden eines Taktqualitätsgrads der durch die Synchronisationsvorrichtung ausgewählten Taktquelle an die nachgeordnete Vorrichtung, nachdem der Status des Phasenregelkreises in die Verriegelungsbetriebsart übergegangen ist.

4. Verfahren gemäß Anspruch 1, wobei das genannte Bestimmen eines an eine nachgeordnete Vorrichtung gesendeten Taktqualitätsgrads in Übereinstimmung mit der ausgewählten Taktquelle und mit dem gegenwärtigen Status des Phasenregelkreises umfasst:
dass der an die nachgeordnete Vorrichtung gesendete Taktqualitätsgrad ein Taktqualitätsgrad der Synchronisationsvorrichtung ist, wenn der gegenwärtige Status des Phasenregelkreises ein Versagen des Phasenregelkreises ist.

5. Taktsynchronisationsvorrichtung, die umfasst:
ein Modul zur Auswahl einer optimalen Taktquelle, das dafür konfiguriert ist, eine Taktquelle auszuwählen;
ein Phasenregelkreisstatus-Detektionsmodul, das dafür konfiguriert ist, einen gegenwärtigen Status eines Phasenregelkreises zu prüfen, nachdem das Modul zur Auswahl einer optimalen Taktquelle die Taktquelle ausgewählt hat; und
ein Taktausgabemodul, das dafür konfiguriert ist, einen an eine nachgeordnete Vorrichtung gesendeten Taktqualitätsgrad in Übereinstimmung mit der durch das Modul zur Auswahl einer optimalen Taktquelle ausgewählten Taktquelle und mit dem gegenwärtigen Status des Phasenregelkreises zu bestimmen;
**dadurch gekennzeichnet, dass**
das Taktausgabemodul ferner dafür konfiguriert ist, einen an eine nachgeordnete Vorrichtung gesendeten Taktqualitätsgrad in Übereinstimmung mit der ausgewählten Taktquelle und mit dem gegenwärtigen Status des Phasenregelkreises auf folgende Weise zu bestimmen:
dass der an die nachgeordnete Vorrichtung gesendete Taktqualitätsgrad ein Taktqualitätsgrad der Synchronisationsvorrichtung ist, wenn der gegenwärtige Status des Phasenregelkreises eine Aufrechterhaltungsbetriebsart oder eine Freischwingungsbetriebsart ist.

6. Vorrichtung gemäß Anspruch 5, wobei das Taktausgabemodul ferner dafür konfiguriert ist, einen an eine nachgeordnete Vorrichtung gesendeten Taktqualitätsgrad in Übereinstimmung mit der ausgewählten Taktquelle und mit dem gegenwärtigen Status des Phasenregelkreises auf folgende Weise zu bestimmen:
dass der an die nachgeordnete Vorrichtung gesendete Taktqualitätsgrad ein Taktqualitätsgrad der durch die Synchronisationsvorrichtung ausgewählten Taktquelle ist, wenn der gegenwärtige Status des Phasenregelkreises eine Verriegelungsbetriebsart ist.

7. Vorrichtung gemäß Anspruch 5, wobei das Taktausgabemodul ferner dafür konfiguriert ist, einen an eine nachgeordnete Vorrichtung gesendeten Taktqualitätsgrad in Übereinstimmung mit der ausgewählten Taktquelle und mit dem gegenwärtigen Status des Phasenregelkreises auf folgende Weise zu bestimmen:
weiteres Detektieren des Status des Phasenregelkreises nach dem Senden des Taktqualitätsgrads der Synchronisationsvorrichtung an die nachgeordnete Vorrichtung, wenn der gegenwärtige Status des Phasenregelkreises eine Entriegelungsbetriebsart ist, während eines Prozesses, in dem der Phasenregelkreis von einer Freischwingungsbetriebsart in eine Verriegelungsbetriebsart übergeht; und Senden eines Taktqualitätsgrads der durch die Synchronisationsvorrichtung ausgewählten Taktquelle an die nachgeordnete Vorrichtung, nachdem der Status des Phasenregelkreises in die Verriegelungsbetriebsart übergegangen ist.

8. Vorrichtung gemäß Anspruch 5, wobei das Taktausgabemodul ferner dafür konfiguriert ist, einen an eine nachgeordnete Vorrichtung gesendeten Taktqualitätsgrad in Übereinstimmung mit der ausgewählten Taktquelle und mit dem gegenwärtigen Status des Phasenregelkreises auf folgende Weise zu bestimmen:
dass der an die nachgeordnete Vorrichtung gesendete Taktqualitätsgrad ein Taktqualitätsgrad der Synchronisationsvorrichtung ist, wenn der gegenwärtige Status des Phasenregelkreises ein Versagen des Phasenregelkreises ist.

## Revendications

1. Procédé de synchronisation d'horloge, comprenant :
un dispositif de synchronisation sélectionnant une source d'horloge optimale (301), vérifiant un état actuel d'une boucle à verrouillage de phase (302), et déterminant un niveau de qualité d'horloge envoyé à un dispositif en aval selon la source d'horloge sélectionnée et l'état actuel de la boucle à verrouillage de phase (303) ;
**caractérisé en ce que**,
ladite détermination d'un niveau de qualité d'horloge envoyé à un dispositif en aval selon la source d'horloge sélectionnée et l'état actuel de la boucle à verrouillage de phase comprend :
lorsque l'état actuel de la boucle à verrouillage de phase est un mode de maintien ou un mode d'oscillation libre, le fait que le niveau de qualité d'horloge est un niveau de qualité d'horloge du dispositif de synchronisation.

2. Procédé selon la revendication 1, dans lequel, ladite détermination d'un niveau de qualité d'horloge envoyé à un dispositif en aval selon la source d'horloge sélectionnée et l'état actuel de la boucle à verrouillage de phase comprend :
lorsque l'état actuel de la boucle à verrouillage de phase est un mode de verrouillage, le fait que le niveau de qualité d'horloge envoyé au dispositif en aval est un niveau de qualité d'horloge de la source d'horloge sélectionnée par le dispositif de synchronisation.

3. Procédé selon la revendication 1, dans lequel, ladite détermination d'un niveau de qualité d'horloge envoyé à un dispositif en aval selon la source d'horloge sélectionnée et l'état actuel de la boucle à verrouillage de phase comprend :
au cours d'un processus de transfert par la boucle à verrouillage de phase d'un mode d'oscillation libre à un mode de verrouillage, si l'état actuel de la boucle à verrouillage de phase est un mode de déverrouillage, après que le dispositif de synchronisation envoie un niveau de qualité d'horloge du dispositif de synchronisation au dispositif en aval, la poursuite de la détection de l'état de la boucle à verrouillage de phase ; et après que l'état de la boucle à verrouillage de phase est transféré au mode de verrouillage, l'envoi d'un niveau de qualité d'horloge de la source d'horloge sélectionnée par le dispositif de synchronisation au dispositif en aval.

4. Procédé selon la revendication 1, dans lequel, ladite détermination d'un niveau de qualité d'horloge envoyé à un dispositif en aval selon la source d'horloge sélectionnée et l'état actuel de la boucle à verrouillage de phase comprend :
lorsque l'état actuel de la boucle à verrouillage de phase est une panne de la boucle à verrouillage de phase, le fait que le niveau de qualité d'horloge envoyé au dispositif en aval est un niveau de qualité d'horloge du dispositif de synchronisation.

5. Appareil de synchronisation d'horloge, comprenant :
un module de sélection de source d'horloge optimale, configuré pour sélectionner une source d'horloge ;
un module de détection d'état de boucle à verrouillage de phase, configuré pour vérifier un état actuel d'une boucle à verrouillage de phase après que le module de sélection de source d'horloge optimale sélectionne la source d'horloge ; et
un module de sortie d'horloge, configuré pour déterminer un niveau de qualité d'horloge envoyé à un dispositif en aval selon la source d'horloge sélectionnée par le module de sélection de source d'horloge optimale et l'état actuel de la boucle à verrouillage de phase ;
**caractérisé en ce que**,
le module de sortie d'horloge est en outre configuré pour déterminer un niveau de qualité d'horloge envoyé à un dispositif en aval selon la source d'horloge sélectionnée et l'état actuel de la boucle à verrouillage de phase de la manière suivante :
lorsque l'état actuel de la boucle à verrouillage de phase est un mode de maintien ou un mode d'oscillation libre, le niveau de qualité d'horloge envoyé au dispositif en aval est un niveau de qualité d'horloge du dispositif de synchronisation.

6. Appareil selon la revendication 5, dans lequel, le module de sortie d'horloge est en outre configuré pour déterminer un niveau de qualité d'horloge envoyé à un dispositif en aval selon la source d'horloge sélectionnée et l'état actuel de la boucle à verrouillage de phase de la manière suivante :
lorsque l'état actuel de la boucle à verrouillage de phase est un mode de verrouillage, le niveau de qualité d'horloge envoyé au dispositif en aval est un niveau de qualité d'horloge de la source d'horloge sélectionnée par le dispositif de synchronisation.

7. Appareil selon la revendication 5, dans lequel, le module de sortie d'horloge est en outre configuré pour déterminer un niveau de qualité d'horloge envoyé à un dispositif en aval selon la source d'horloge sélectionnée et l'état actuel de la boucle à verrouillage de phase de la manière suivante :
au cours d'un processus de transfert par la boucle à verrouillage de phase d'un mode d'oscillation libre à un mode de verrouillage, lorsque l'état actuel de la boucle à verrouillage de phase est un mode de déverrouillage, après l'envoi d'un niveau de qualité d'horloge du dispositif de synchronisation au dispositif en aval, par la poursuite de la détection de l'état de la boucle à verrouillage de phase ; et après que l'état de la boucle à verrouillage de phase est transféré au mode de verrouillage, par l'envoi d'un niveau de qualité d'horloge de la source d'horloge sélectionnée par le dispositif de synchronisation au dispositif en aval.

8. Appareil selon la revendication 5, dans lequel, le module de sortie d'horloge est en outre configuré pour déterminer un niveau de qualité d'horloge envoyé à un dispositif en aval selon la source d'horloge sélectionnée et l'état actuel de la boucle à verrouillage de phase de la manière suivante :
lorsque l'état actuel de la boucle à verrouillage de phase est une panne de la boucle à verrouillage de phase, le niveau de qualité d'horloge envoyé au dispositif en aval est un niveau de qualité d'horloge du dispositif de synchronisation.
